# EUROPEAN PATENT APPLICATION

(11) **EP 1 406 092 A2**
(43) Date of publication of application: **07.04.2004**
(21) Application number: 03022271.5
(22) Date of filing: 01.10.2003
(51) Int. Cl.: G01N 35/00, G01N 33/483

(54) **Sampling element, treatment device and treatment method for an analyte**

(30) Priority: 02.10.2002 JP 2002289871
(71) Applicant: MATSUSHITA ELECTRIC INDUSTRIAL CO., LTD., Kadoma-shi, Osaka 571-8501 (JP)
(72) Inventor: Kitawaki, Fumihisa, Katano-shi Osaka, 576-0021 (JP); Kawamura, Tatsurou, Kyotanabe-shi Kyoto, 610-0351 (JP)
(74) Representative: Leson, Thomas Johannes Alois, Dipl.-Ing.

(57) **Abstract**

In order to simplify the pretreatment such as collection of an analyte, treatment of the analyte, introduction of the analyte into a measurement system (reaction system) and dilution of the analyte and to improve operability in examinations using large-sized automatic analyzers and POCT devices, the present invention provides an analyte sampling element including a first region capable of quantitatively collecting and temporarily retaining the analyte and a second region on which a dynamic effect is acted from the outside to move the first region.

## Description

### BACKGROUND OF THE INVENTION

The present invention relates to an element for simply treating an analyte to analyze a substance contained in the analyte and a method for treating the analyte using the element. The present invention principally belongs to the field of clinical examination.

In accordance with recent progress in analysis and examination technologies, measurement of various substances is now becoming possible. Especially in the field of clinical examination, measurement of substances in a body fluid reflecting the disease condition has become possible owing to development of measurement principles based on specific reactions such as biochemical reaction, enzyme reaction and antigen-antibody reaction. To keep up with this trend, a variety of large-sized automatic analyzers have been developed for the purpose of measuring more analytes in terms of more items (analysis of multi analytes for multi items. With such an automatic analyzer, measurement can be achieved at high sensitivity and high accuracy owing to improvement in performance of components of the analyzer and reaction reagents used in the analyzer.

At present, a large-sized automatic analyzer of this kind is possessed by, for example, a clinical laboratory of a general hospital to examine various kinds of analytes sent thereto day by day. In general, an analyte to be measured by the automatic analyzer is pretreated, diluted if necessary, and then subjected to the measurement. For example, if the analyte is blood, it is pretreated to separate blood cells and plasma. From this aspect, an operator of the analyzer in the clinical laboratory needs to be an expert to the minimum level required.

On the other hand, an examination system called "Point of Care Testing" (POCT) has lately been gathering attention. The POCT is based on a concept contradictory to the measurement in the clinical laboratory as described above. The prime purpose the POCT is to achieve a simple and quick measurement that reduces time required from the collection of the analyte until the measurement result is obtained. Therefore, the POCT requires a simple measurement principle and a measurement device which is small-sized, portable and easy to use. Owing to the recent progress in technology development, a small-sized measurement device that allows easy measurement, as typified by a blood glucose sensor, has been developed.

The POCT is effective in that it allows a speedy and accurate diagnosis by quickly obtaining the measurement result, the examination costs are reduced and a burden to undergo an examination is eased owing to the reduction of the required amount of the analyte such as blood. Further, the amount of infectious waste is reduced. Since the clinical examination is now rapidly shifting to the POCT, the measurement devices that conform to the POCT are under development to meet the demand.

Examples of the measurement devices that conform to the POCT include an enzyme sensor as typified by the above-described blood glucose sensor to which enzyme electrode reaction is applied and a qualitative immune sensor as typified by a test kit for pregnancy to which immune antigen-antibody reaction is applied. In these days, a quantitative immune sensor has also been developed and put into the market. All of them have been achieved as a result of construction of a simple measurement principle accompanied by progress in a technology of obtaining biochemical materials in a solid phase, producing sensor elements and a sensing system. In addition, is also now under development a technique for downsizing the large-sized automatic analyzer owned by the clinical examination center as described above.

In general, the examination of an analyte is carried out by nine steps of: (1) collection of an analyte; (2) treatment of the analyte; (3) introduction of the analyte into a measurement (reaction) system; (4) dilution of the analyte; (5) introduction of a reagent; (6) reaction; (7) removal of unreacted matters; (8) detection; and (9) measurement of a substance in the analyte. In the large-sized automatic analyzer, the steps (3) to (9) are automated in general, and analysis of multi analytes for multi items is allowed.

The steps (1) and (2), for example, separation of blood cells from blood, are not automated. Therefore, these steps take the most part of the examination time, which has been obstruction in obtaining quick measurement results. Further, the treatment of the analyte is not what anyone can do because expertise is required. As to a dilution step required for an analyte containing high concentration protein, some devices automatically carry out the step. However, some are complicated in structure and increase the costs, which are hard to be used in the POCT. Hence, it is expected that problems will be caused in pretreatment of the analyte even if the large-sized automatic analyzer is downsized in the future by adopting µ-TAS or the like with a view to conforming to the POCT which will be a significant trend in the clinical examination.

On the other hand, devices that conform to the POCT such as a blood glucose sensor do not require the step (2). The analyte goes through the steps (3) to (8) in a short time while flowing into a sensor element after the step (1). The same is applied to the test kit for pregnancy. However, not all the devices conforming to the POCT are based on the sensor system described above. In most cases, manual operation is required in the steps (1) and (2), or (3) and (4) in some cases, which has been a problem. In other words, most of the devices conforming to the POCT have been achieved by merely simplifying the steps (4) to (9) (see Japanese Laid-Open Patent Publication No. Hei6-160388).

### BRIEF SUMMARY OF THE INVENTION

In view of the above-described prior art, an object of the present invention is to provide an analyte sampling element which is capable of carrying out the steps (1) to (3), (4) or (5) in a simple and easy manner and applicable to every automated small devices or devices conforming to the POCT, an analyte treatment device and an analyte treatment method using the element.

To accomplish the above-described object, the present invention provides an analyte sampling element comprising a first region capable of quantitatively collecting and temporarily retaining an analyte and a second region on which a dynamic effect is acted from the outside to move the first region.

It is effective that the first region retains the analyte by capillarity.

It is effective that the dynamic effect is acted on by change in magnetic field.

It is effective that the first region releases the analyte with the movement of the second region.

It is effective that the analyte sampling element retains a reagent a₁ for reacting with a substance contained in the analyte and/or a reagent b₁ for destroying a cell contained in the analyte.

It is effective that the reagent a₁ is an enzyme, an antigen, an antibody, a receptor or nucleic acid.

It is effective that the substance is protein, a hormone, an antibody, an enzyme, an antigen or nucleic acid.

It is effective that the reagent b₁ is inorganic salt or a surfactant.

It is effective that the cell is an erythrocyte, a leukocyte or a platelet.

Further, it is effective that a component released from the cell destroyed by the reagent b₁ is protein, glycosylated protein, phosphorylated protein, a hormone, lipid, an antibody, an enzyme, an antigen, a receptor, an inhibitor, DNA or RNA.

The present invention further provides an analyte treatment device comprising: an analyte sampling element comprising a first region capable of quantitatively collecting and temporarily retaining an analyte and a second region on which a dynamic effect is acted from the outside to move the first region; a reaction cell into which the sampling element is introduced; a means for exerting the dynamic effect on the sampling element in the reaction cell; and an optical measurement system for measuring a reaction in the reaction cell.

In the analyte treatment device, it is effective that the means for exerting the dynamic effect is a magnetic field changing device which exerts the dynamic effect on the sampling element by magnetic force.

Further, it is effective that the optical measurement system is a light scattering spectrophotometer, a fluorospectrophotometer, an absorption spectrophotometer or an emission spectrophotometer.

Moreover, the present invention provides an analyte treatment method comprising the steps of: (a) quantitatively collecting and retaining an analyte in an analyte sampling element comprising a first region capable of quantitatively collecting and temporarily retaining the analyte and a second region on which a dynamic effect is acted from the outside to move the first region; (b) introducing the sampling element retaining the analyte into a reaction system; (c) moving the sampling element by the dynamic effect acted on from the outside of the reaction system to release the analyte from the sampling element and homogeneously mixing the analyte in the reaction system by stirring.

It is effective that prior to the step (a), a reagent a₁ for reacting with a substance contained in the analyte and/or a reagent b₁ for destroying a cell contained in the analyte are retained in the sampling element.

Also in the analyte treatment method, it is effective that the reagent a₁ is an enzyme, an antigen, an antibody, a receptor or nucleic acid.

It is effective that the substance is protein, a hormone, an antibody, an enzyme, an antigen or nucleic acid.

It is effective that the reagent b₁ is inorganic salt or a surfactant.

It is effective that the cell is an erythrocyte, a leukocyte or a platelet.

It is effective that a component released from the cell destroyed by the reagent b₁ is protein, glycosylated protein, phosphorylated protein, a hormone, lipid, an antibody, an enzyme, an antigen, a receptor, an inhibitor, DNA or RNA.

It is effective that the reaction system comprises a buffer, a solution containing a reagent a₂ for reacting with a substance contained in the analyte or a solution containing a reagent b₂ for destroying a cell contained in the analyte.

It is effective that in the step (c), the analyte and the reaction system are homogeneously mixed by stirring, and at the same time, the reagent a₂ reacts with a substance contained in the analyte and/or the reagent b₂ destroys a cell contained in the analyte.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

FIG. 1 is a schematic oblique view of a sampling element according to the present invention.

FIG. 2 is a view of the sampling element observed from the direction of an arrow X of FIG. 1.

FIG. 3 is a view of the sampling element observed from the direction of an arrow Y of FIG. 1.

FIG. 4 is a schematic oblique view of another sampling element according to the present invention.

FIG. 5 is a view of the sampling element observed from the direction of an arrow X of FIG. 4.

FIG. 6 is a view of the sampling element observed from the direction of an arrow Y of FIG. 4.

FIGs. 7(a) to 7(d) are views illustrating the steps of an analyte treatment method using an analyte sampling element according to the present invention.

FIGs. 8(a) to 8(c) are views illustrating the steps of an analyte treatment method using an analyte treatment device according to the present invention.

FIGs. 9(a) and 9(b) are views illustrating how a sampling element 50 is detached from the tip of a handling device 40 shown in FIG. 8.

FIGs. 10(a) and 10(b) are views illustrating the steps of an analyte treatment method using another handling device according to the present invention.

FIG. 11 is a schematic side view illustrating a structure of an analyte treatment device according to the present invention.

FIG. 12 is a schematic top view of the analyte treatment device shown in FIG. 11.

FIG. 13 is a graph illustrating absorption spectra according to an example of the present invention and a comparative example.

FIG. 14 is a graph illustrating a dilution series according to examples of the present invention.

FIG. 15 is a graph illustrating the measurement results of hemolysis according to examples of the present invention.

FIG. 16 is a graph illustrating the results of human serum albumin measurement according to examples of the present invention.

### DETAILED DESCRIPTION OF THE INVENTION

According to the sampling element according to the present invention, the analyte treatment device and the analyte treatment method using the element, sampling and pretreatment of an analyte for analysis and examination of the analyte are easily carried out. Therefore, the present invention contributes to the development of devices conforming to the POCT that allows easy and quick measurement.

The analyte sampling element according to the present invention includes a first region capable of quantitatively collecting and temporarily retaining an analyte and a second region on which a dynamic effect is acted from the outside to move the first region. It is preferable that the first region retains the analyte by capillarity and the dynamic effect is acted on by change in magnetic field.

More specifically, the analyte sampling element of the present invention includes a capillary tube capable of quantitatively collecting and retaining the analyte and a first magnetic substance arranged in contact with the capillary tube. In this case, the capillary tube corresponds to the first region and the first magnetic substance to the second region. A feature of the analyte sampling element of the present invention is that the element is made of the capillary tube and the magnetic substance (material).

With use of the analyte sampling element, as detailed below, a second magnetic substance is moved by a dynamic effect acted thereon from the outside by a magnetic field to move the capillary tube together with the first magnetic substance. Thereby, the analyte is released from the capillary tube by centrifugal force or the like and mixed in a liquid system outside the capillary tube under stirring.

In this context, the capillary tube, which may be referred to as a capillary, is a narrow tube having a diameter that allows capillarity or an assembly obtained by stacking two or more flat plates at a certain interval that allows capillarity. For example, a fabric knitted of warps and wefts obtained by stranding fine fibers may also be used as the capillary tube as long as the fibers or yarns are spaced to such a degree that allows the capillarity. In either case, those allow capillarity are generically referred to as the capillary tube.

The capillarity is a phenomenon in which a solid and liquid will have a certain form or area after reaching equilibrium at an interface between them. To this phenomenon, three factors, i.e., surface tension of the liquid, wettability of the solid to the liquid and the diameter of the capillary tube, are related. A relationship between these three factors and the capillarity is explained taking, as an example, water spontaneously creeping up into a glass tube.

Between water molecules, intermolecular force (cohesive force) is acted. However, water molecules on the water surface are in contact with air and hence being attracted only to the underwater direction. The force acted on the water surface is called surface tension, which makes the water surface rounded.

When a capillary tube such as a narrow glass tube is made contact with the water in a perpendicular direction, the water is drawn to the wall of the glass tube to creep up because force acted between the glass tube and the water molecules (adhesive force and wettability) is greater than the intermolecular force (cohesive force) between the water molecules. The water creeps up until the weight of the creeping water and the adhesive force reach equilibrium. The narrower the glass tube is, the smaller is the weight of water to creep up. Accordingly, the water creeps up much higher to be in equilibrium with the adhesive force. Thus, the capillary tube is preferably made of a material having considerable affinity for liquid such as water.

The wettability is obtained easily, for example, by observing to what degree water is spread when dropped onto a flat plate made of the same material as that for forming the capillary tube. It is assumed that the higher the degree of the spread is, the higher wettability the material has. Examples of the material include glass, quartz and iron, any of which can be used to provide a capillary tube. In the present invention, the capillary tube is required to have the function of quantitatively collecting and introducing an analyte into the capillary tube and retaining the analyte therein. That is, the required function is to sample the analyte in a series of operations before subjecting the analyte to various analyses.

The magnetic substance is a material having a property of being magnetized in a magnetic field (magnetic property), i.e., a material interacting with a magnetic field which the material has. Every substance shows a certain response to a magnetic field and hence can be classified into ferromagnetic substances which are strongly attracted to the magnetic field direction, paramagnetic substances which are attracted slightly and diamagnetic substances which slightly repels a magnet. The magnetic substance mentioned in the present invention includes in particular the ferromagnetic substances or the paramagnetic substances, e.g., metals such as iron having a property of being attracted to a magnet. The first and second magnetic substances according to the present invention are attracted to each other.

The first magnetic substance is required to have the function of being attracted to the second magnetic substance such as a magnet, and in addition, of moving in any way in response to the movement of the second magnetic substance. For example, the first and second magnetic substances are required to be in such a relationship that when the second magnetic substance shows rotational or oscillation movement, the first magnetic substance does the same, or that when the second magnetic substance shows rotational movement, the first magnetic substance shows simple harmonic motion. Therefore, the first magnetic substance needs to have a weight and a size that allow the movement with the second magnetic substance.

The sampling element according to the present invention is made of the capillary tube and the first magnetic substance which are integrated. Accordingly, the capillary tube itself is also moved together with the first magnetic substance. The capillary tube and the first magnetic substance may be integrated by, for example, winding an adhesive material such as a tape around them, wrapping them in a film made of a fluorocarbon resin such as Teflon, or providing the capillary tube itself made of a magnetic material. In either case, what is important is that the capillary tube and the first magnetic substance are integrated such that the capillary tube can be moved together with the first magnetic substance without coming off the moving first magnetic tube. How to integrate the capillary tube and the first magnetic substance is not limited to those described above.

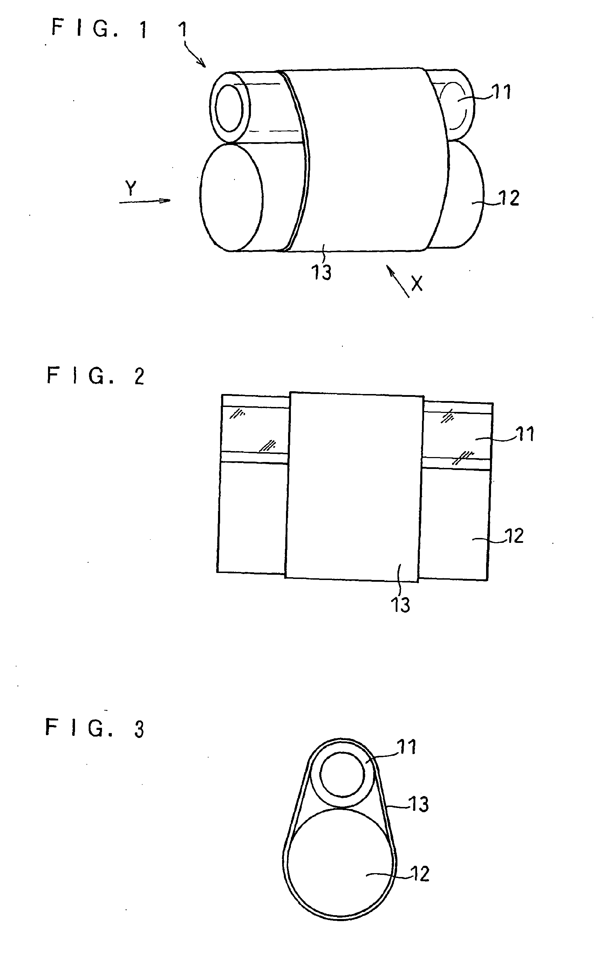

FIG. 1 is a schematic oblique view of a sampling element according to the present invention. As shown in FIG. 1, a sampling element 1 of the present invention is provided by integrating a capillary tube 11 and a first magnetic substance 12 with an adhesive tape 13. For reader's reference, FIGs. 2 and 3 show the sampling element observed from the directions of arrows X and Y of FIG. 1, respectively.

In the sampling element of the present invention thus constructed, a first reagent may be retained. The first reagent may be retained in various ways, e.g., in a second capillary tube additionally integrated to the first magnetic substance in a solution state or a dry state, or in a vessel portion provided for the sampling element in a dry state. Or alternatively, the first reagent may be infiltrated into a carrier such as a glass fiber filter paper or a cellulose filter paper, which is integrated with the sampling element. In either way, it is necessary that the first reagent be retained not to be spilt off and that the region retaining the first reagent be not in a sealed state but exposed to the outside.

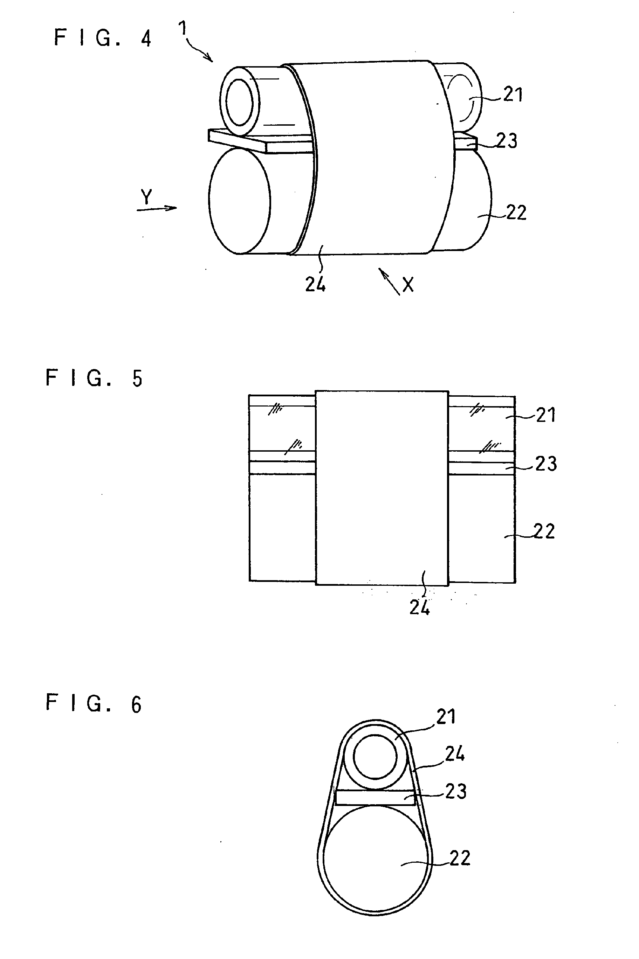

FIG. 4 is a schematic oblique view of another sampling element according to the present invention. As shown in FIG. 4, a sampling element 2 of the present invention is provided by integrating a capillary tube 21 and a first magnetic substance 22 using an adhesive tape 24. Further, a glass fiber filter paper 23 infiltrated with a first reagent is integrally supported between the capillary tube 21 and the first magnetic substance 22. For reader's reference, FIGs. 5 and 6 show the sampling element observed from the directions of arrows X and Y of FIG. 4, respectively.

The first reagent to be infiltrated may be a reagent a₁ for reacting with a substance contained in the analyte. Examples thereof include an enzyme, an antigen, an antibody, a receptor and nucleic acid.

Examples of the enzyme include glucose oxidase, for example, which causes specific reaction with glucose in the analyte.

Examples of the antigen include protein which specifically reacts with an antibody contained in the analyte. The antibody in the analyte may be an HCV antibody, an HIV antibody or the like.

Examples of the antibody include a polyclonal antibody, a monoclonal antibody, a chimera antibody, a Fab antibody, an F(ab)2 antibody, an Fv antibody and the like, which can be prepared from an antigen contained in the analyte. The antigen contained in the analyte may be protein, glycosylated protein, phosphorylated protein, hapten or the like.

Examples of the receptor include those causing specific reaction with physiologically active substances contained in the analyte such as a steroid, a thyroid hormone, vitamins, a peptide hormone, a growth factor, cytokine and catecholamine.

Examples of the nucleic acid include those which can be a gene such as DNA and RNA.

Thus, the substance contained in the analyte signifies protein, a hormone, an antibody, an enzyme, an antigen or nucleic acid.

Examples of the protein include: protein composed solely at least one of 20 amino acids such as albumin, globulin, myoglobin, prolamin, gluterin, histone, protamine and the like; C-reactive protein (CRP) used as an infectious disease marker; serum amyloid A (SAA); a carcinoembryonic antigen (CEA) used as a tumor marker; α-fetoprotein (AFP); all glycosylated proteins which are complexes of protein and sugar such as a sugar chain antigen 19-9 (CA19-9), glycosylated hemoglobin (HbAlc) and glycoalbumin; all phosphorylated proteins obtained by linking phosphoric acid via ester bond to a hydroxyl group of protein such as serine, threonine and tyrosine residues; and all lipoproteins which are complexes of protein and lipid such as high density lipoprotein (HDL) and low density lipoprotein (LDL).

Examples of the hormone include human chorionic gonadotropin (hCG), luteinizing hormone (LH), triiodothyronine (T3), thyroxine (T4), a thyroid-stimulating hormone (TSH) and insulin.

Examples of the enzyme include glutamic-oxaloacetic transaminase (GOT), alkaline phosphatase (ALP), glutamate pyruvate transaminase (GPT), lactic dehydrogenase (LDH), leucine aminopeptidase (LAP), γ-glutamyl transpeptidase (γ-GTP), cholinesterase (ChE), acid phosphatase (ACP) and prostatic acid phosphatase (PAP).

Examples of the antibody include an HCV antibody, an HIV antibody and immunoglobulin (IgE) and examples of the antigen include viruses and bacteria.

Examples of the nucleic acid include SNPS, DNA and RNA.

The first reagent to be retained may be a reagent b₁ for destroying a cell contained in the analyte. Examples of the reagent b₁ include inorganic salt, a surfactant and the like. The inorganic salt changes osmotic pressures of the inside and the outside of cells to contract or expand the cells, thereby promoting destruction of cells. The surfactant impairs the balance between hydrophilicity and hydrophobicity of protein which is a cell component, thereby promoting the destruction of cells.

Examples of the inorganic salt include sodium chloride, potassium chloride, sodium fluoride, sodium thiocyanide and potassium thiocyanide. Examples of the surfactant include sucrose monolaurate, sodium oleate and sodium dodecyl sulfate (SDS).

Cells to be destroyed by the reagent b₁ may be, for example, erythrocytes, leukocytes and platelets in blood. In this case, the purpose of the cell destruction is to mix or dissolve the erythrocytes, leucocytes or substances in platelets in a liquid system outside the cells.

Examples of the component released from the destroyed cells include a hormone, lipid, an antibody, an enzyme, an antigen, a receptor, an inhibitor, DNA and RNA.

The sampling element according to the present invention may retain both of the reagent a₁ for reacting with the substance in the analyte and the reagent b₁ for destroying the cells contained in the analyte. In this case, the reagent a₁ and the reagent b₁ should not be influenced from each other. The combination of the reagents a₁ and b₁ is suitably selected by a person skilled in the art as long as the effect of the present invention is not impaired.

The sampling element of the present invention is used to sample and then release the analyte in a reaction system (liquid system) in a simple and speedy manner. Thus, the present invention also relates to an analyte treatment device and an analyte treatment method using the sampling element. The analyte treatment method mentioned herein includes the steps of mixing or dissolving the analyte into a desired liquid system, as well as diluting the analyte.

The analyte treatment device of the present invention includes: the above-described analyte sampling element; a reaction cell into which the sampling element is introduced; a means for exerting a dynamic effect on the sampling element in the reaction cell; and an optical measurement system for measuring a reaction in the reaction cell.

The means for exerting the dynamic effect is preferably a magnetic field changing device which exerts the dynamic effect on the sampling element by magnetic force. For example, a magnetic stirrer described later may be used.

As the optical measurement system, may be used a light scattering spectrophotometer, a fluorospectrophotometer, an absorption spectrophotometer or an emission spectrophotometer.

In the analyte treatment method using the analyte sampling element of the present invention, the above-described analyte treating device is used. More specifically, the method includes the steps of: (a) quantitatively collecting and retaining an analyte in an analyte sampling element comprising a first region capable of quantitatively collecting and temporarily retaining the analyte and a second region on which an dynamic effect is acted from the outside to move the first region; (b) introducing the sampling element retaining the analyte into a reaction system; (c) moving the sampling element by the dynamic effect acted on from the outside of the reaction system to release the analyte from the sampling element and homogeneously mixing the analyte in the reaction system by stirring.

Prior to the step (a), it is preferable that a reagent a₁ for reacting with a substance contained in the analyte and/or a reagent b₁ for destroying a cell contained in the analyte are retained in the sampling element.

Further, in the step (c), the analyte and the reaction system are homogeneously mixed by stirring, and at the same time, the reagent a₂ reacts with a substance contained in the analyte and/or the reagent b₂ destroys a cell contained in the analyte.

Next, the analyte treatment method of the present invention will be explained, taking as an example the case where a sampling element provided by integrating a capillary tube made of glass (a glass tube) and a stirring bar (a stirrer bar) used for organic synthesis and dissolution of a solid.

First, an analyte is quantitatively drawn up into the glass tube and retained therein (sampling) to bring the analyte into contact with (preferably immerse in) an intended liquid system.

Then, using a magnetic stirrer outside the liquid system, the stirring bar (fist magnetic substance) in the liquid system is rotated. Due to the rotational movement, the analyte retained in the glass tube is released into the liquid system, and then homogeneously mixed with or dissolved into the liquid. The stirrer includes the second magnetic substance.

Since the glass tube and the stirring bar are integrated, the glass tube is also rotated together with the stirring bar. Therefore, the analyte retained in the glass tube is released into the liquid by centrifugal force, and then homogeneously mixed by stirring.

The sampling element is not limited to a bar shape. It is sufficient that the sampling element has a weight and a size that allow the sampling element to move in the liquid in response to the movement of the second magnetic substance (e.g., a magnet) outside the liquid and the analyte to be released into and mixed homogeneously with the liquid by stirring. The movement of the second magnetic substance outside the liquid system is not limited to the rotational one by the stirrer as described above. For example, it may be oscillation or simple harmonic motion. What is important is that the movement is caused so that the analyte retained in the sampling element is efficiently released into and then mixed homogeneously with the liquid.

Thus, the sampling element of the present invention has three essential functions of: sampling the analyte; releasing the analyte into the liquid; and homogeneously mixing the analyte and the liquid. The sampling signifies that the analyte is quantitatively collected and retained in the capillary tube by capillarity. The releasing means that the analyte retained in the capillary tube is released into the liquid. Further, the homogeneous mixing means that the analyte and the liquid are homogeneously mixed such that the concentration of the substance contained in the analyte is uniform in every part of the resulting mixture.

The analyte treatment method according to the present invention includes the steps of: quantitatively collecting the analyte into the capillary tube of the sampling element by capillarity; moving in the liquid system the sampling element in which the analyte has been injected by magnetic force acted thereon from the outside of the liquid system; and homogeneously mixing the analyte in the capillary tube into the liquid during the movement. This may be referred to as a method of homogeneously mixing the analyte.

According to the analyte treatment method of the present invention, the substance contained in the analyte is easily diluted. For example, hemoglobin contained in high concentration in erythrocytes in blood can easily be diluted. Further, if a reagent which reacts with the substance in the analyte is contained in the liquid, reaction for the analysis of the substance contained in the analyte occurs immediately after mixing the analyte homogeneously into the liquid.

The liquid used in the analyte treatment method of the present invention may be a buffer, a solution containing a reagent a₂ for reacting with the substance contained in the analyte or a solution containing a reagent b₂ for destroying the cells contained in the analyte.

Examples of the buffer include a phosphate buffer, a TRIS buffer and a bicarbonate buffer.

As the reagent a₂ for reacting with the substance contained in the analyte, those cited above as the reagent a₁ for reacting with the substance contained in the analyte may be used. As the reagent b₂ for destroying the cells contained in the analyte, those cited above as the reagent b₁ for destroying the cells contained in the analyte may be used.

Where a first reagent is retained in the sampling element of the present invention, the first reagent may be released into the liquid during the movement of the sampling element. In this case, the released first reagent may be the reagent a₂ for reacting with the substance contained in the analyte. The substance in the analyte and the reagent a₁ may react during the homogeneous mixing step.

With respect to the method of homogeneously mixing the analyte of the present invention, the analyte may be a body fluid, e.g., blood, urea, saliva, tear and sweat.

Possible reactions in the homogeneous mixing step of the analyte according to the present invention are, for example, enzyme reaction, antigen-antibody reaction, hybridization, hemolysis and bacteriolysis.

Next, the homogeneous mixing method using the analyte sampling element of the present invention and a stirrer is explained with reference to the drawings.

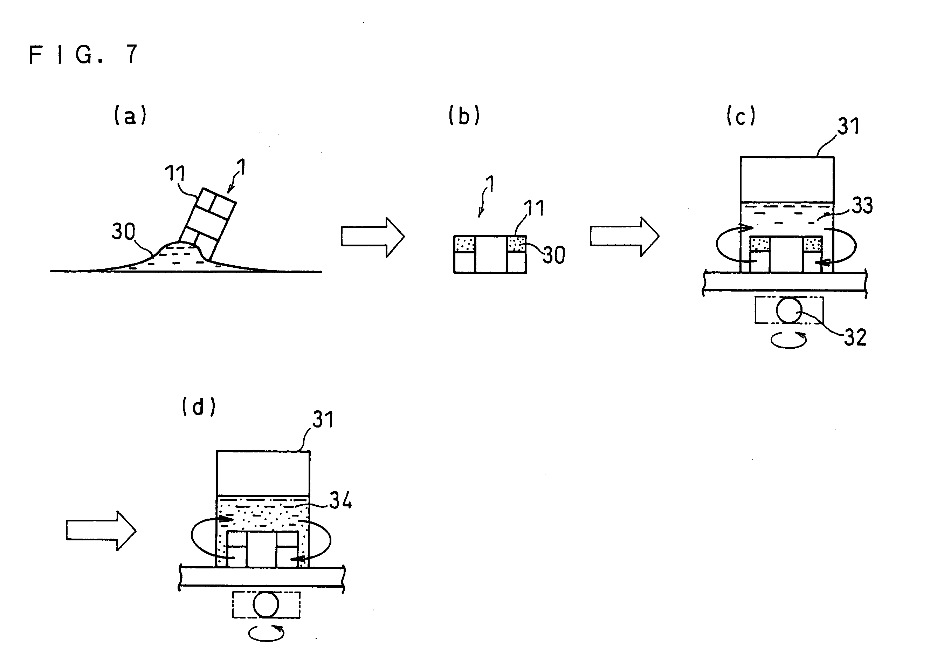

FIGs. 7(a) to 7(d) are views illustrating the steps of the analyte treatment method using the sampling element of the present invention. This explanation is given of the case where the sampling element 1 shown in FIG. 1 is used, but the adhesive tape 13 is omitted from the drawings. First, as shown in FIG. 7(a), the sampling element 1 is made contact with an analyte 30 to introduce the analyte 30 into a capillary tube 11 by capillarity. Thus, the analyte 30 is retained in the capillary tube 11 of the sampling element 1 as shown in FIG. 7(b).

Then, the sampling element 1 is introduced into a reaction cell 31 (reaction system) containing a liquid system 33. A second magnetic substance 32, i.e., a magnet for the stirrer, is arranged at the outside bottom surface of the reaction cell 31. Due to the rotational movement of the second magnetic substance 32, the sampling element 1 shows the rotational movement in the liquid system, thereby the analyte retained in the capillary tube 11 is released into the liquid system 33 by centrifugal force (FIG. 7(c)). Then, the released analyte 30 and the liquid system 33 are homogeneously mixed by being stirred by the rotating sampling element 1. Thus, a mixture solution 34 (dissolved solution) is resulted in the reaction cell 31 (FIG. 7(d)).

The present invention further provides a handling device for the analyte sampling element to be adopted in the analyte treatment method using the sampling element. The handling device detachably holds an analyte sampling element comprising a first region capable of quantitatively collecting and temporarily retaining an analyte and a second region on which a dynamic effect is acted from the outside to move the first region and is capable of introducing the sampling element retaining the analyte into the reaction system.

Further, it is effective that the handling device has a mechanism that allows the handling device to retain a liquid system for the reaction system and introduce the liquid system into the reaction system together with the sampling element.

The liquid system may be a buffer, a solution containing the reagent a₂ for reacting with the substance contained in the analyte or a solution containing the reagent b₂ for destroying the cells contained in the analyte.

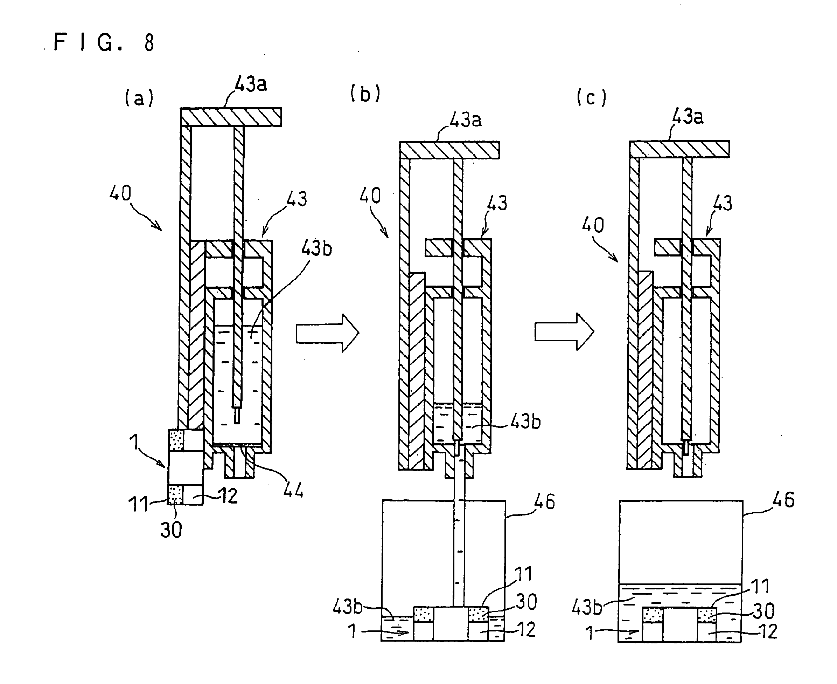

FIGs. 8(a) to 8(c) show the steps of the analyte treatment method of the present invention using the sampling element and the handling device of the present invention. As shown in FIG. 8(a), a handling device 40 according to the present invention includes a syringe 43 which is equipped with a piston 43a and retains liquid 43b and an aluminum seal 44 provided at the bottom of the syringe 43 to retain the liquid 43b inside the syringe 43. The sampling element 1 of the present invention is attached to the tip of the syringe 43.

In use of the handling device 40, an analyte 30 is retained in advance in the capillary tube 11 of the sampling element 1 as shown in FIG. 8(a), and then the piston 43a of the syringe 43 is pushed to introduce the liquid 43b together with the sampling element 1 into a reaction cell 46 as shown in FIG. 8(b). Then, the reaction cell 46 containing the liquid 43b and the sampling element 1 retaining the analyte 30 is placed on a stirrer to rotate the sampling element 1. Thereby, the analyte 30 is released into and mixed homogeneously with the liquid 43b by stirring.

Features of the handling device 40 shown in Figs. 8(a) to 8(c) are that the device is in the syringe form, the liquid 43b to be mixed with the analyte is sealed in the syringe, the sampling element 1 is detachably arranged at the tip thereof, and the sampling element 1 is detached and the aluminum seal 44 is torn to flow the liquid 43b out by pushing the piston 43a. It is preferable that the syringe is made of a plastic material, for example, and disposable.

The aluminum seal 44 has the function of retaining the liquid 43b without leakage and being easy to break by external force. Thus, breakable materials having the same function may be used in place of the aluminum seal 44.

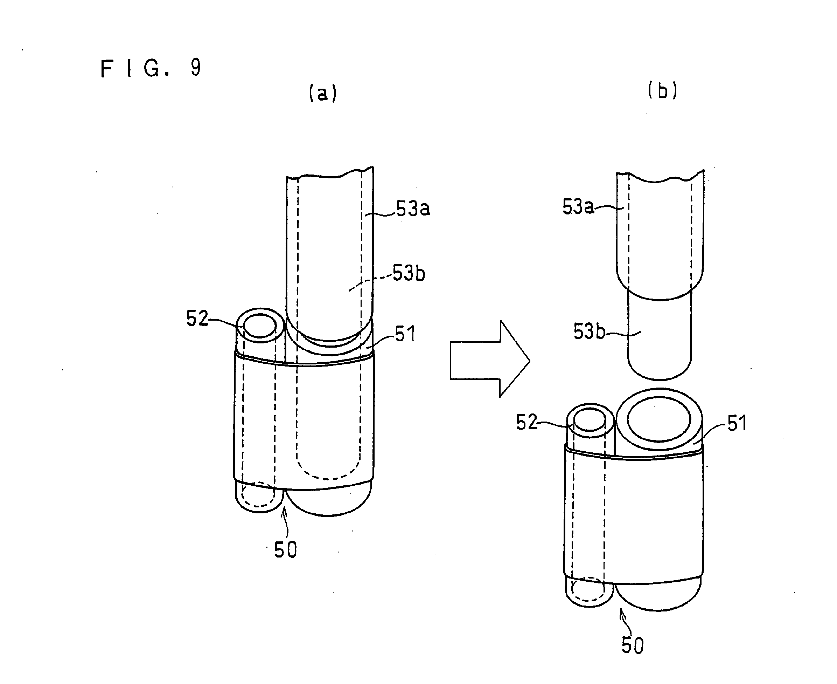

FIGs. 9(a) and 9(b) show how the sampling element 1 is detached from the tip of the handling device 40. FIG. 9(a) and 9(b) are enlarged views illustrating the tip portion of the handling device 40.

As seen in FIGs. 9(a) and 9(b), a member 53 includes a core 53b and a cylinder 53a capable of showing up-and-down movements along the core 53b. In this case, a first magnetic substance 51 in a sampling element 50 has a cylinder shape, through which the core 53b is inserted. When the cylinder 53a is shifted downward, the sampling element 50 is pushed by the cylinder 53a and detached from the core 53b.

In summary with reference to FIGs. 8 and 9, in use of the handling device 40, the analyte 30 is introduced in advance into the capillary tube 11 of the sampling element 1 attached to the handling device 40. Then, the piston 43a of the syringe 43 is pushed toward the reaction cell 46 to introduce the sampling element 1 into the reaction cell 46. Simultaneously, the aluminum seal 44 is torn by the tip of the piston 43a to introduce the liquid 43b into the reaction cell 46. Thereafter, steps as shown in FIGs. 7(c) and 7(d) are carried out.

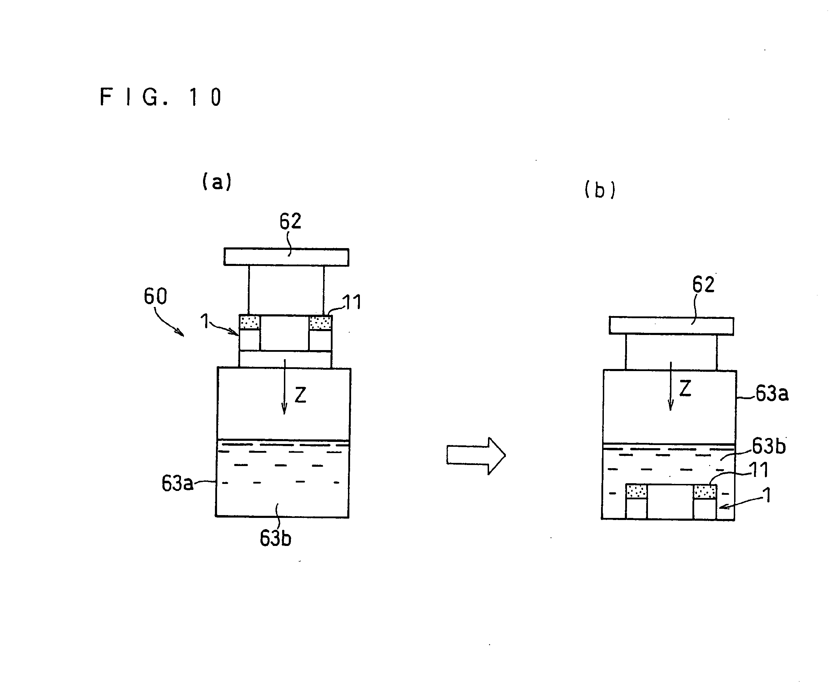

Next, explanation is given of the analyte treatment method using another handling device according to the present invention. As shown in FIG. 10(a), in a handling device 60, a reaction cell 63a containing liquid 63b is sealed by the sampling element 1. The analyte is retained in the capillary tube 11 of the sampling element 1 (not shown).

The handling device 60 further includes a lid 62 having a mechanism that allows the sampling element 1 to fall in the direction of an arrow Z to be placed in the reaction cell 63a. More specifically, the sampling element 1 is introduced into the reaction cell 63a by pressing the lid 62 downwardly in the perpendicular direction. In either case of FIG. 8 and FIG. 10, the sampling, introduction of the liquid and homogeneous mixing are carried out with ease.

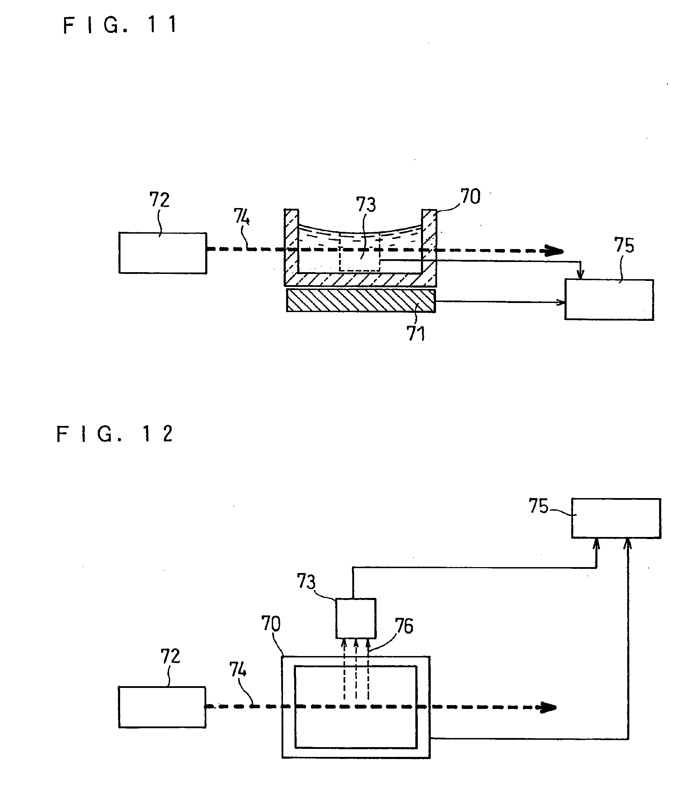

Now referring to FIGs. 11 and 12, an embodiment of the analyte treatment device according to the present invention using the analyte sampling element is explained. FIG. 11 is a view illustrating the analyte treatment device of the present invention, partially in section. The analyte treatment device includes a reaction cell 70 into which the sampling element is to be introduced, a means 71 for exerting a dynamic effect on the sampling element in the reaction cell 70 (e.g., a magnetic stirrer) and an optical measurement system for measuring reaction in the reaction cell 70. The optical measurement means includes a light source 72 and a photometer (photodetector) 73. In the reaction cell 70, a sampling element according to the present invention is introduced, though not shown.

The reaction cell 70 is made of transparent quartz, for example. Substantially parallel light 74 (or a laser) emitted from the light source 72 is applied to the liquid system in the reaction cell 70. For example, a desired reagent (liquid system) is placed in the reaction cell 70 in advance, and then the sampling element provided with a capillary tube retaining the analyte (first region) and a magnetic substance (second region) is introduced into the reaction cell 70. Thereafter, the sampling element is rotated by the dynamic effect acted thereon by the means 71, thereby the analyte is released from the capillary tube into the reaction cell 70.

Due to the reaction between the analyte and the reagent, the liquid system in the reaction cell 70 may be whitened. If scattered light intensity, light transmissivity or absorbancy of the liquid system is measured by the photometer 73 before and after the reaction, it is allowed to confirm whether the reaction between the analyte and the reagent is completed or to measure the analyte quantitatively or qualitatively. Thus, the analyte can be treated appropriately. The analyte treatment device may be controlled by a controller 75.

Hereinbelow, the analyte treatment method using the sampling element of the present invention is detailed by examples. But, the present invention is not limited thereto.

### EXAMPLE 1

In this example, a sampling element of the present invention shown in FIG. 1 was produced. A glass tube (EM CAPILLARY MINICAPS manufactured by ASONE) was used as a capillary tube 11 and a stirrer bar (Laboran rotor element manufactured by ASONE) was used as a first magnetic substance 12. An adhesive tape 13 was wound around the glass tube and the stirrer bar to integrate them to obtain the sampling element shown in FIG. 1. The volume of the glass tube was 5 µ 1 and the size of the stirrer bar was 25 mm × Ø 8 mm.

### EXAMPLES 2-6 and COMPARATIVE EXAMPLE 1

In these examples, how effectively the analyte was diluted by the analyte treatment method of the present invention was examined. In this method, the steps shown in FIGs. 7(a) to 7(c) and the sampling element fabricated in Example 1 were adopted.

First, a sampling element of the present invention was fabricated in the same manner as Example 1. In 1 ml of distilled water, 20 mg of a dye (Brilliant Green manufactured by Wako Pure Chemical) was dissolved to obtain an analyte (a BG solution) having a concentration of 20 g/ml. This analyte was used to observe from an absorption spectrum how the analyte was mixed and dissolved into the liquid.

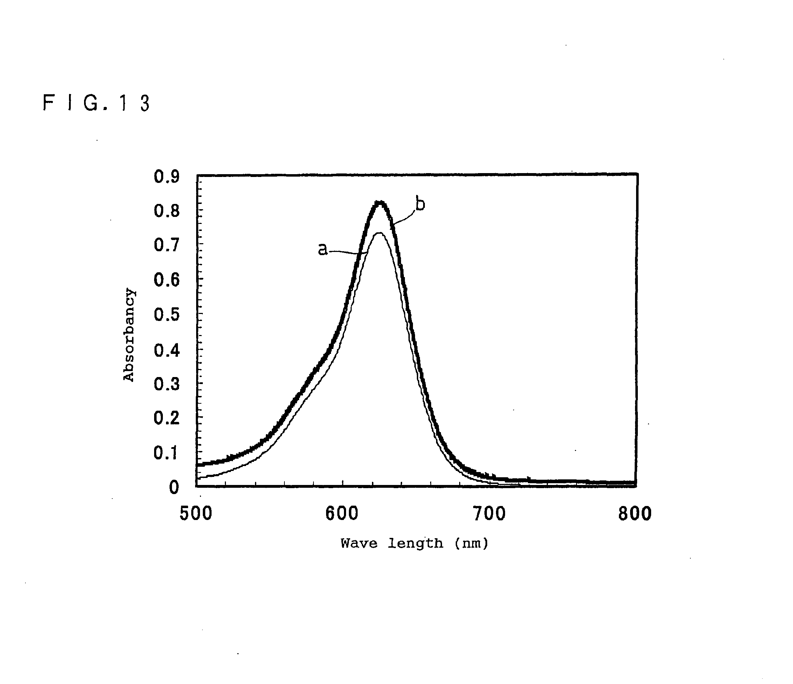

The analyte was injected into the 5 µl glass tube of the sampling element. Then, the sampling element was placed in a beaker containing 5 ml of distilled water and immediately stirred with a stirrer (Mighty Magnetic Stirrer Model-16 manufactured by KOIKE PRECISION INSTRUMENT). After stirring for 1 minute, 1 ml of the liquid in the beaker was collected and an absorption spectrum thereof was measured. The result was indicated by a in FIG. 13 (Example 2).

On the other hand, in a conventional manner, 5 µl of the analyte same as that of Example 2 was collected using a pipetteman (manufactured by Gilson) and introduced in an aqueous solution being stirred by a stirrer in a beaker. After stirring for 1 minute, 1 ml of the liquid in the beaker was collected and an absorption spectrum thereof was measured. The result was indicated by b in FIG. 13 (Comparative Example 1).

FIG. 13 shows that the analyte treatment method using the sampling element of the present invention achieved homogeneous mixing of the analyte as has conventionally been done. Thus, a simpler method for treating the analyte was provided.

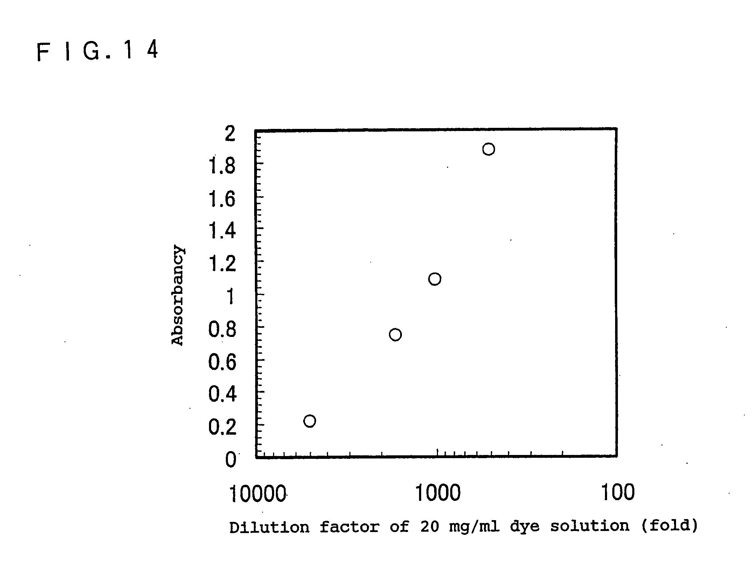

Further, sampling elements were fabricated in the same manner as Example 1 to study their effects of diluting the analyte. With glass tubes (EM CAPILLARY MINICAPS manufactured by ASONE) each having the volume of 1 µl, 3 µl, 5 µl and 10 µl and stirrer bars (25 mm × Ø 8 mm), four sampling elements having the volume of 1 µl, 3 µl, 5 µl and 10 µl*,* respectively, were fabricated. The analyte same as that of Example 2 was introduced into the four sampling elements. Each of the sampling elements were introduced into 5 ml of an aqueous solution contained in a beaker and diluted by stirring using the stirrer. Then, 1 ml of the liquid was collected from the beaker to measure the absorption spectrum. The results were shown in FIG. 14 (Examples 3 to 6). As seen in FIG. 14, a dilution series of the analyte was obtained by the analyte treatment method using the sampling element of the present invention.

### EXAMPLES 7 to 11

In these examples, sampling elements having the structure shown in FIG. 4 and retaining therein potassium chloride were fabricated and hemolysis was carried out.

Glass fiber filter papers 23 infiltrated with 0.1 %, 0.5 %, 1 %, 5 % and 10 % potassium chloride solutions and freeze dried, respectively, were prepared and arranged between a 3 µl glass tube which serves as the capillary tube 21 and a stirrer bar which serves as the first magnetic substance 22. An adhesive tape 24 was wound around them, thereby providing five sampling elements retaining therein potassium chloride.

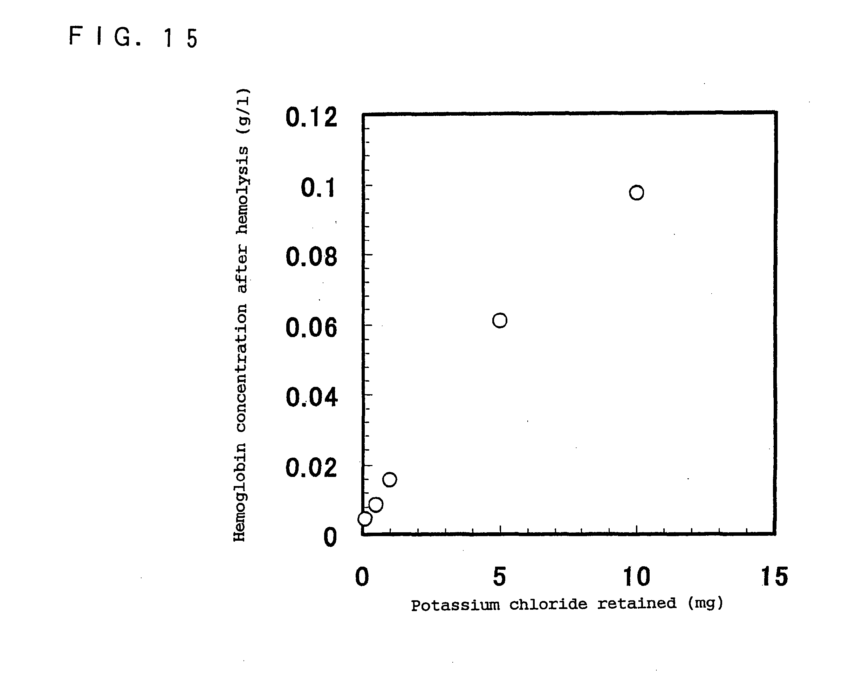

Each of the sampling elements was placed in 1 ml of whole blood, stirred for 3 minutes and then subjected to centrifugation to separate blood cells. The hemoglobin concentration in the thus obtained plasma was measured using an SLS-Hb measurement kit (manufactured by Wako Pure Chemical). FIG. 15 shows the results. FIG. 15 indicates that the use of the sampling element retaining potassium chloride therein had a possibility of controlling the hemolysis.

### EXAMPLE 12

In this example, a sampling element having the structure shown in FIG. 1 was used to carry out human serum albumin measurement.

A sampling element including a 3 µl glass tube as a capillary tube was fabricated in the same manner as Example 1. As analytes, were used human serum albumins in the concentration of 0 g/l, 0.005 g/l, 0.015 g/l, 0.046 g/l, 0.23 g/l, 0.46 g/l, 1.5 g/l and 4.6 g/l, respectively.

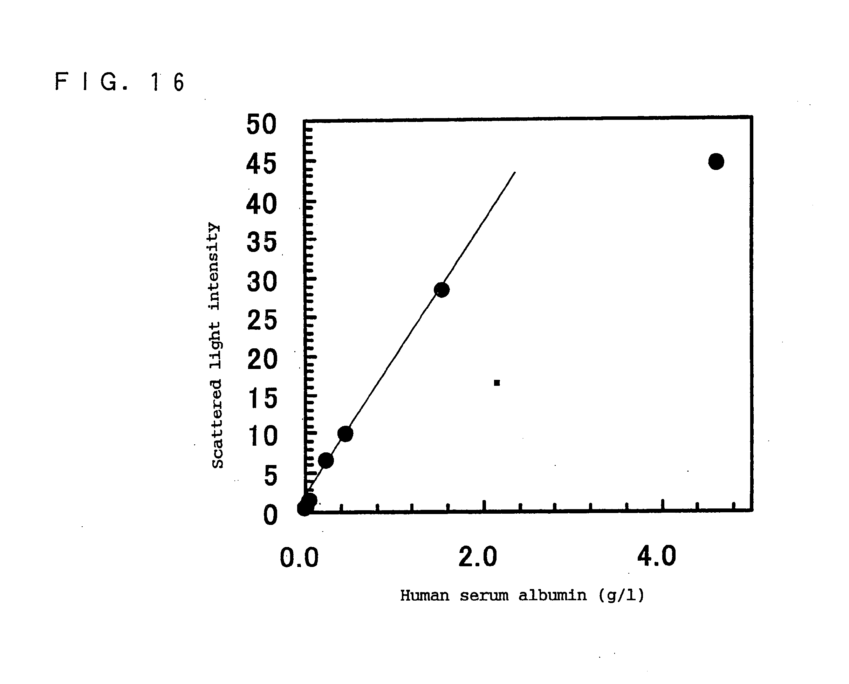

For the measurement, 3 µl of human serum albumin was injected into the sampling element. The sampling element was then placed in a 1 ml buffer (50 m MMOPS, 4 % PEG, ph 7.4) containing a rabbit anti-human albumin antibody and a mouse anti-human albumin antibody and stirred for 3 minutes. Thereafter, scattered light intensity was measured (measurement wavelength was 670 nm). FIG. 16 shows the results. As seen in FIG. 16, it was confirmed that human serum albumin was measured with use of the sampling element of the present invention. This indicates the possibility of applying the sampling element of the present invention to the measurement of other substances than human serum albumin.

The analyte sampling element, analyte treatment device and analyte treatment method according to the present invention are suitably used for an urinalysis test, pregnancy test, blood test, immune serum test, functional test for endocrine system and test for viruses and bacteria, etc.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

In order to simplify the pretreatment such as collection of an analyte, treatment of the analyte, introduction of the analyte into a measurement system (reaction system) and dilution of the analyte and to improve operability in examinations using large-sized automatic analyzers and POCT devices, the present invention provides an analyte sampling element including a first region capable of quantitatively collecting and temporarily retaining the analyte and a second region on which a dynamic effect is acted from the outside to move the first region.

## Claims

1. An analyte sampling element comprising:
a first region capable of quantitatively collecting and temporarily retaining an analyte; and
a second region on which a dynamic effect is acted from the outside to move said first region.

2. The analyte sampling element in accordance with claim 1, wherein said first region retains said analyte by capillarity.

3. The analyte sampling element in accordance with claim 1, wherein said dynamic effect is acted on by change in magnetic field.

4. The analyte sampling element in accordance with claim 1, wherein said first region releases said analyte in response to the movement of said second region.

5. The analyte sampling element in accordance with claim 1, further retaining a reagent a₁ for reacting with a substance contained in said analyte and/or a reagent b₁ for destroying a cell contained in said analyte.

6. The analyte sampling element in accordance with claim 5, wherein said reagent a₁ is an enzyme, an antigen, an antibody, a receptor or nucleic acid.

7. The analyte sampling element in accordance with claim 5, wherein said substance is protein, a hormone, an antibody, an enzyme, an antigen or nucleic acid.

8. The analyte sampling element in accordance with claim 5, wherein said reagent b₁ is inorganic salt or a surfactant.

9. The analyte sampling element in accordance with claim 5, wherein said cell is an erythrocyte, a leukocyte or a platelet.

10. The analyte sampling element in accordance with claim 5, wherein a component released from said cell destroyed by said reagent b₁ is protein, glycosylated protein, phosphorylated protein, a hormone, lipid, an antibody, an enzyme, an antigen, a receptor, an inhibitor, DNA or RNA.

11. An analyte treatment device comprising:
an analyte sampling element comprising a first region capable of quantitatively collecting and temporarily retaining an analyte and a second region on which a dynamic effect is acted from the outside to move said first region;
a reaction cell into which said sampling element is introduced;
a means for exerting the dynamic effect on said sampling element in said reaction cell; and
an optical measurement system for measuring a reaction in said reaction cell.

12. The analyte treatment device in accordance with claim 11, wherein said means for exerting the dynamic effect is a magnetic field changing device which exerts the dynamic effect on said sampling element by magnetic force.

13. The analyte treatment device in accordance with claim 11, wherein said optical measurement system is a light scattering spectrophotometer, a fluorospectrophotometer, an absorption spectrophotometer or an emission spectrophotometer.

14. An analyte treatment method comprising the steps of :
(a) quantitatively collecting and retaining an analyte in an analyte sampling element comprising a first region capable of quantitatively collecting and temporarily retaining the analyte and a second region on which a dynamic effect is acted from the outside to move said first region;
(b) introducing said sampling element retaining said analyte into a reaction system;
(c) moving said sampling element by the dynamic effect acted on from the outside of said reaction system to release said analyte from said sampling element and mixing said analyte in said reaction system by stirring.

15. The analyte treatment method in accordance with claim 14, wherein prior to the step (a), a reagent a₁ for reacting with a substance contained in said analyte and/or a reagent b₁ for destroying a cell contained in said analyte are retained in said sampling element.

16. The analyte treatment method in accordance with claim 15, wherein said reagent a₁ is an enzyme, an antigen, an antibody, a receptor or nucleic acid.

17. The analyte treatment method in accordance with claim 15, wherein said substance is protein, a hormone, an antibody, an enzyme, an antigen or nucleic acid.

18. The analyte treatment method in accordance with claim 15, wherein said reagent b₁ is inorganic salt or a surfactant.

19. The analyte treatment method in accordance with claim 15, wherein said cell is an erythrocyte, a leukocyte or a platelet.

20. The analyte treatment method in accordance with claim 15, wherein a component released from said cell destroyed by said reagent b₁ is protein, glycosylated protein, phosphorylated protein, a hormone, lipid, an antibody, an enzyme, an antigen, a receptor, an inhibitor, DNA or RNA.

21. The analyte treatment method in accordance with claim 14, wherein said reaction system is a buffer, a solution containing a reagent a₂ for reacting with a substance contained in said analyte or a solution containing a reagent b₂ for destroying a cell contained in said analyte.

22. The analyte treatment method in accordance with claim 14, wherein in the step (c), said analyte is mixed in said reaction system by stirring, and at the same time, said reagent a₂ reacts with a substance contained in said analyte and/or said reagent b₂ destroys a cell contained in said analyte.
